# EUROPÄISCHE PATENTSCHRIFT

(11) **EP 2 049 316 B1**
(45) Veröffentlichungstag und Bekanntmachung des Hinweises auf die Patenterteilung: **01.03.2017**
(21) Anmeldenummer: 07786462.7
(22) Anmeldetag: 31.07.2007
(51) Int. Cl.: B29C 45/53, B29C 45/54, B29C 45/58, B29C 45/76, B29C 45/78

(54) **DROSSEL FÜR SPRITZGIESSMASCHINE ZUM SPRITZGIESSEN VON KAUTSCHUK- BZW. ELASTOMERMATERIALIEN**
FLOW RESTRICTOR FOR INJECTION MOULDING MACHINE FOR THE INJECTION MOULDING OF RUBBER MATERIALS OR OF ELASTOMER MATERIALS
ÉTRANGLEMENT POUR MACHINE DE MOULAGE PAR INJECTION POUR LE MOULAGE DE MATÉRIAUX EN CAOUTCHOUC OU ÉLASTOMÈRES

(30) Priorität: 01.08.2006 DE 102006035816
(43) Veröffentlichungstag der Anmeldung: 22.04.2009
(73) Patentinhaber: LWB Steinl GmbH & Co.KG, 84032 Altdorf (DE)
(72) Erfinder: SCHMIDT, Rainer, 84032 Altdorf (DE); DEGENBECK, Hubert, 84103 Postau/Oberköllnbach (DE)
(74) Vertreter: Vossius & Partner Patentanwälte Rechtsanwälte mbB
(86) Internationale Anmeldenummer: PCT/EP2007/006765
(87) Internationale Veröffentlichungsnummer: WO 2008/014976

(56) Entgegenhaltungen:
- EP-A- 0 907 487
- WO-A-2006/008164
- GB-A- 1 166 061
- JP-A- 10 244 564
- JP-A- 63 011 318
- JP-A- 2005 144 859
- JP-B1- 2 994 369
- US-A- 2 478 013

## Beschreibung

Die Erfindung betrifft eine Drossel für eine Spritzgießmaschine zum Spritzgießen von Kautschuk- bzw. Elastomermaterialien, eine Spritzgießmaschine mit einer derartigen Drossel, ein System zum Temperieren von Kautschuk- bzw. Elastomermaterialien beim Spritzgießen sowie ein diesbezügliches Verfahren.

Im Stand der Technik ist beispielsweise aus der WO 2006/008164 A2 eine Spritzgießmaschine und ein Spritzgießverfahren zum Spritzgießen von Kunststoffmaterialien, insbesondere Kautschuk- bzw. Elastomermaterialien, bekannt. Diese Spritzgießmaschine verfügt über einen Extruder, eine erste Kolben-/ Zylindereinheit und eine in Serie dazu vorgesehene zweite Kolben-/Zylindereinheit. Der Zylinder der ersten Kolben-/Zylindereinheit mündet in das Ende der zweiten Kolben-/ Zylindereinheit, das von einer zu befüllenden Spritzgießform entfernt liegt. Das Kunststoffmaterial wird mittels der ersten Kolben-/Zylindereinheit durch den Zylinder der zweiten Kolben-/Zylindereinheit in die Spritzgießform eingebracht, wobei der Kolben der zweiten Kolben-/Zylindereinheit den Strömungsweg zur Spritzgießform freigibt. Anschließend wird der Kolben der zweiten Kolben-/Zylindereinheit in den zugehörigen Zylinder gefahren, um das im zweiten Zylinder befindliche Kunststoffmaterial in die Spritzgießform einzubringen. Die beiden Kolben-/ Zylindereinheiten dieser Spritzgießmaschine sind vorzugsweise im wesentlichen senkrecht zueinander angeordnet und durch ein Umlenkstück miteinander verbunden. Im Umlenkstück kann eine mechanisch einstellbar oder elektrisch, hydraulisch oder pneumatisch betätigte Drossel mit variablen Querschnitt vorgesehen sein. Mit Hilfe dieser Drossel ist es möglich, das Kunststoffmaterial auf eine vorgegebene SollTemperatur einzustellen.

Darüber hinaus ist aus der DE 199 54 653 B4 und DE 299 23 755 U1 ein Extruder zur Aufbereitung von Kautschukmischungen für Elastomerprodukte bekannt. Der Extruder weist einen Zylinder, eine im Zylinder drehbar gelagerte Schnecke zum Einziehen, Fördern und Homogenisieren der Kautschukmischung und einen Spritzkopf mit eingesetztem Extrusionswerkzeug auf. Entsprechend einer Ausführungsform ist in einen Spritzkopf des Extruders ein Druckstück eingesetzt, um die Mischungstemperatur der Kautschukmischung durch Anpassung bzw. Erhöhung des Druckes sowohl im Schneckenkanal als auch im Spritzkopf durch Umsetzung der Druckenergie weiter zu erhöhen und die mittlere Verweilzeit bei erhöhten Mischungstemperaturen zu verringern.

Die DE 19 64 895 A, DE 2 002 102 A und CH 512 1978 C betreffen Vorrichtung und Verfahren zum Verarbeiten von Kunststoffen. Dabei wird der in einen Zylinder eingefüllte kalte Kunststoff ohne äußere Wärmezufuhr mittels eines Kolbens im wesentlichen adiabatisch komprimiert und nur dadurch erwärmt sowie durch eine verengte Austrittsöffnung herausgedrückt und dabei aufgeschmolzen. Das Aufschmelzen des Kunststoffs erfolgt durch die beim Hindurchpressen durch einen Scherspalt von etwa 0,05 mm als Austrittsöffnung stattfindende Umwandlung der mit Hochdruck aufgebrachten Kompressionsenergie.

Weitere Verfahren zum Extrudieren von Kunststoffen sowie diesbezügliche Extruder sind beispielsweise in der DE 37 37 618 A1, DE 1 529 774 A sowie US 3 647 344 A beschrieben.

Der vorliegenden Erfindung liegt die Aufgabe zugrunde, Mittel bereitzustellen, die die Verarbeitung von Kautschuk- bzw. Elastomermaterialien beim Spritzgießen erheblich verbessern, wobei insbesondere kürzere Zykluszeiten sowie eine höhere Variabilität hinsichtlich der zu verarbeitenden Kautschuk- bzw. Elastomermaterialien gewährleistet wird. Diese Aufgabe wird mit den Merkmalen der unabhängigen Patentansprüche gelöst. Bevorzugte Ausführungsformen sind in den abhängigen Patentansprüchen beschrieben.

Die Erfindung geht zur Lösung der vorstehenden Aufgabe von dem Grundgedanken aus, eine Temperierung des Kautschuk- bzw. Elastomermaterials durch eine im Strömungsweg in der Spritzgießmaschine vorgesehene Drossel zu gewährleisten. Gemäß einem Aspekt der vorliegenden Erfindung wird eine Drossel für eine Spritzgießmaschine zum Spritzgießen von Kautschuk- bzw. Elastomermaterialien bereitgestellt, die einen Drosselblock, einen darin vorgesehenen Einströmkanal und Ausströmkanal sowie eine Drosseleinrichtung aufweist. Der Einströmkanal mündet unter einem Winkel, der vorzugsweise größer als 45°, stärker bevorzugt größer als 75° ist, in den Ausströmkanal. Die Drosseleinrichtung weist einen Drosselkolben auf, der sowohl zum Drosseln des Materialflusses als auch zum Einspritzen des Kautschuk- bzw. Elastomermaterials in eine Spritzgießform dient.

Vorzugsweise weist die Drosseleinrichtung ferner eine mit dem Drosselkolben zusammenwirkende und sich konisch in Strömungsrichtung verjüngende Drosselfläche auf, die einen Endabschnitt mit minimalem Durchmesser hat, durch den der Drosselkolben durchgeführt werden kann, wobei bei durch den Endabschnitt hindurch geführtem Drosselkolben die Drossel geschlossen ist. Darüber hinaus oder alternativ dazu ist es bevorzugt, die Drosseleinrichtung mit einer Drosselbuchse und einem Drosselbuchseneinsatz zu versehen, wobei die Drosselbuchse und der Drosselbuchseneinsatz einen Ringraum im Mündungsbereich des Einströmkanals in dem Ausströmkanal bilden. Der Querschnitt dieses Ringraums vergrößert sich vorzugsweise mit zunehmender Entfernung vom Einströmkanal. Dadurch kann eine möglichst gleichmäßige Verteilung des zugeführten Kautschuk- bzw. Elastomermaterials im Ringspalt erzielt werden.

Alternativ dazu ist es auch möglich, den Drosselbuchseneinsatz mit einer sich konisch in Strömungsrichtung verjüngenden Bohrung zu versehen, so dass nicht der gesamte Umfang des Drosselkolbens von Kautschuk- bzw. Elastomermaterial umströmt wird, sondern lediglich ein Umfangsteil, beispielsweise etwa 90° des Kolbens mit dem Kautschuk- bzw. Elastomermaterial in Kontakt kommt. Dadurch wird eine geringere Verschmutzung beim Zurückfahren des Drosselkolbens gewährleistet. Dementsprechend bildet der Drosselbuchseneinsatz bei sämtlichen Ausführungsformen eine sich konisch in Strömungsrichtung verjüngende Drosselfläche, die mit dem Drosselkolben zusammenwirkt.

Gemäß einem weiteren Aspekt der vorliegenden Erfindung wird eine Drossel für eine Spritzgießmaschine zum Spritzgießen von Kautschuk- bzw. Elastomermaterialien bereitgestellt, die einen Drosselblock, einen darin vorgesehenen Einströmkanal und Ausströmkanal sowie eine in dem Ausströmkanal angeordnete Drosseleinrichtung aufweist. Der Einströmkanal mündet in den Ausströmkanal. Die Drosseleinrichtung weist einen Drosselkolben und eine mit dem Drosselkolben zusammenwirkende und sich konisch in Strömungsrichtung verjüngende Drosselfläche auf, wobei die Drosselfläche einen Endabschnitt mit minimalem Durchmesser bzw. Querschnitt hat, durch den der Drosselkolben hindurch geführt werden kann. Bei durch den Endabschnitt durchgeführtem Drosselkolben ist die Drossel geschlossen.

Vorzugsweise weist die Drosseleinrichtung eine Drosselbuchse und einen Drosselbuchseneinsatz auf, wobei die Drosselbuchse und der Drosselbuchseneinsatz einen Ringraum im Mündungsbereich des Einströmkanals in den Ausströmkanal bilden. Vorzugsweise ist der Querschnitt dieses Ringraums vom Einströmkanal entfernt bzw. dem Einströmkanal gegenüberliegend größer als im Mündungsbereich. Der Drosselbuchseneinsatz definiert vorzugsweise die sich konisch in Strömungsrichtung verjüngende Drosselfläche.

Gemäß einem weiteren Aspekt der vorliegenden Erfindung wird eine Drossel für eine Spritzgießmaschine zum Spritzgießen von Kautschuk- bzw. Elastomermaterialien bereitgestellt, die einen Drosselblock, einen darin vorgesehenen Einströmkanal und Ausströmkanal sowie eine in dem Ausströmkanal angeordnete Drosseleinrichtung aufweist. Der Einströmkanal mündet in den Ausströmkanal. Die Drosseleinrichtung weist einen Drosselkolben, eine Drosselbuchse und einen Drosselbuchseneinsatz auf, wobei die Drosselbuchse und der Drosselbuchseneinsatz einen Ringraum im Mündungsbereich des Einströmkanals in den Ausströmkanal bilden.

Dieser Ringraum hat vorzugsweise einen sich mit zunehmender Entfernung vom Einströmkanal vergrößernden Querschnitt. Bei den verschiedenen Ausführungsformen ist der Drosselbuchseneinsatz vorzugsweise in der Drosselbuchse angeordnet. Ferner sind vorzugsweise die Drosselbuchse und der Drosselbuchseneinsatz von gegenüberliegenden Seiten des Drosselblocks montierbar. Der Drosselbuchseneinsatz definiert auch bei der vorstehend beschriebenen Ausführungsform eine sich konisch in Strömungsrichtung verjüngende Drosselfläche, die mit dem Drosselkolben zusammenwirkt.

Gemäß einem weiteren Aspekt betrifft die vorliegende Erfindung eine Spritzgießmaschine zum Spritzgießen von Kautschuk- bzw. Elastomermaterialien mit einem Extruder, einer ersten Kolben-/Zylindereinheit und einer in Serie dazu vorgesehenen zweiten Kolben-/ Zylindereinheit sowie einer Drossel entsprechend der vorstehenden Beschreibung. Der Einströmkanal der Drossel ist mit einem Ausströmende der ersten Kolben-/ Zylindereinheit und der Ausströmkanal der Drossel mit einem Einströmende der zweiten Kolben-/Zylindereinheit in Strömungsverbindung. Vorzugsweise dient der Kolben der zweiten Kolben-/Zylindereinheit als Drosselkolben und entleert den Zylinder der zweiten Kolben-/Zylindereinheit im wesentlichen vollständig.

Des weiteren ist die Erfindung auf ein System zum Temperieren von Kautschuk- bzw. Elastomermaterialien beim Spritzgießen gerichtet, wobei das System eine einen ersten Kolben und einen ersten Zylinder aufweisende erste Kolben-/Zylindereinheit zum Zuführen des Kautschuk- bzw. Elastomermaterials in und durch eine Drossel gemäß der vorstehenden Beschreibung sowie eine Einrichtung zum Einstellen der Position des Drosselkolbens zum Drosseln des Materialflusses entsprechend vorbestimmter Parameter für das jeweilige Kautschuk- bzw. Elastomermaterial aufweist. Vorzugsweise weist dieses System ferner eine Einrichtung zum Bewegen des Drosselkolbens durch die Drosseleinrichtung in einen zweiten Zylinder einer zweiten Kolben-/Zylindereinheit auf, um das Kautschuk- bzw. Elastomermaterial in eine Spritzgießform einzubringen.

Darüber hinaus betrifft die Erfindung gemäß einem weiteren Aspekt ein Verfahren zum Temperieren von Kautschuk- bzw. Elastomermaterialien beim Spritzgießen mit den Schritten des Zuführens des Kautschuk- bzw. Elastomermaterials mittels einer einen ersten Kolben und einen ersten Zylinder aufweisenden ersten Kolben-/Zylindereinheit in und durch eine Drossel gemäß der vorstehenden Beschreibung und des Einstellens des Drosselkolbens entsprechend für das jeweilige Kautschuk- bzw. Elastomermaterial vorbestimmter Parameter. Vorzugsweise weist das Verfahren den weiteren Schritt des Bewegens des Drosselkolbens durch die Drosseleinrichtung in einen zweiten Zylinder einer zweiten Kolben-/Zylindereinheit auf, um das Kautschuk- bzw. Elastomermaterial in eine Spritzgießform einzubringen.

Nachfolgend werden bevorzugte Ausführungsformen der Erfindung anhand der Zeichnungen beispielhaft beschrieben. Es zeigen:
- Fig. 1: eine schematische Querschnittsansicht durch eine erste Ausführungsform einer erfindungsgemäßen Drossel bei im wesentlichen geöffnetem Drosselkolben;
- Fig. 2: eine Querschnittsansicht ähnlich Fig. 1, wobei der Drosselkolben in einer Drosselposition zum Temperieren des Kautschuk- bzw. Elastomermaterials eingefahren ist;
- Fig. 3: eine perspektivische Querschnittsansicht einer Ausführungsform einer erfmdungsgemäßen Drossel;
- Fig. 4a: eine perspektivische Querschnittsansicht einer ersten Ausführungsform einer in der erfindungsgemäßen Drossel einsetzbaren Drosselbuchse;
- Fig. 4b: eine perspektivische Querschnittsansicht einer weiteren Ausführungsform einer in der erfindungsgemäßen Drossel verwendbaren Drosselbuchse;
- Fig. 5: eine perspektivische Darstellung einer Ausführungsform eines in der erfindungsgemäßen Drossel verwendbaren Drosselkolbens;
- Fig. 6a: eine perspektivische Ansicht einer ersten Ausführungsform eines Drosselbuchseneinsatzes zur Verwendung in der erfindungsgemäßen Drossel;
- Fig. 6b: eine Ansicht ähnlich Fig. 6A einer zweiten Ausführungsform eines Drosselbuchseneinsatzes;
- Fig. 6c: eine perspektivische Ansicht einer dritten Ausführungsform eines Drosselbuchseneinsatzes;
- Fig. 7a: eine Querschnittsdarstellung einer ersten Ausführungsform einer erfindungsgemäßen Drossel;
- Fig. 7b: eine Querschnittsansicht einer zweiten Ausführungsform einer erfindungsgemäßen Drossel;
- Fig. 8: ein Diagramm der Mischungstemperatur in Abhängigkeit vom Druckverlust;
- Fig. 9: ein Diagramm der Temperatur in Abhängigkeit von der Drosselkolbenstellung; und
- Fig. 10: ein Diagramm des Druckverlustes in Abhängigkeit von der Drosselkolbenstellung.

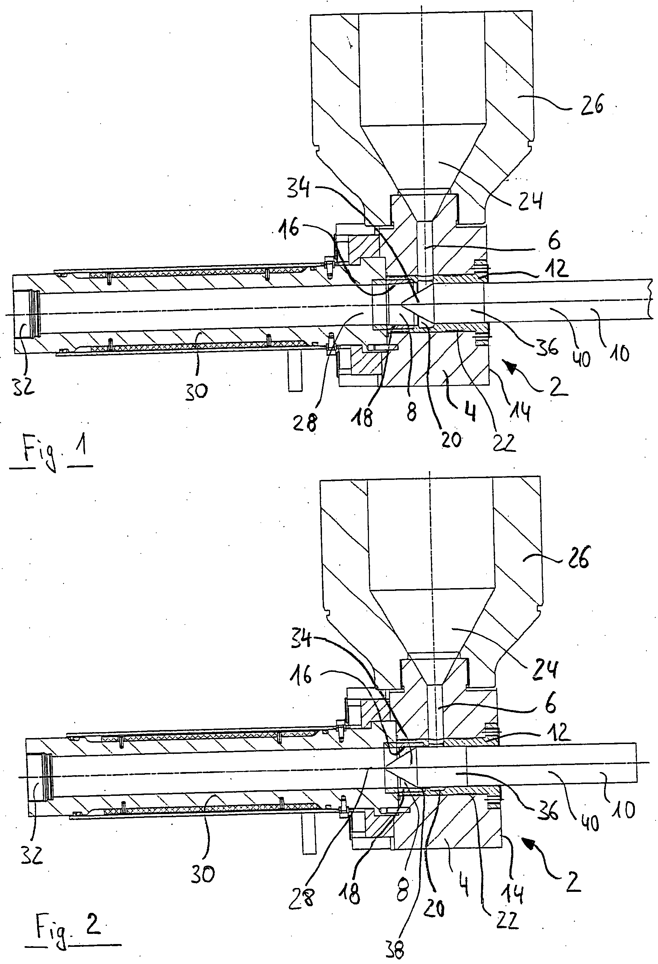

Figuren. 1 und 2 zeigen eine Querschnittsansicht einer ersten Ausführungsform der erfindungsgemäßen Drossel 2. Die Drossel weist im wesentlichen einen Drosselblock 4, einen darin vorgesehenen Einströmkanal 6 und Ausströmkanal 8 sowie eine Drosseleinrichtung auf. Der Einströmkanal 6 mündet vorzugsweise unter einem Winkel größer 0°, vorzugsweise größer 45°, stärker bevorzugt größer 75° in den Ausströmkanal 8. In den Figuren 1 und 2 dargestellten Ausführungsform ist der Winkel zwischen dem Einströmkanal 6 und dem Ausströmkanal 8 in etwa 90°.

Die Drosseleinrichtung ist im wesentlichen im Ausströmkanal 8 des Drosselblocks 4 angeordnet und weist einen Drosselkolben 10 auf, der in einer Drosselbuchse 12 geführt ist. Die Drosselbuchse 12 wird vorzugsweise von einer ersten Seitenfläche 14 des Drosselblocks 4 montiert und mit diesem verschraubt. Die Drosseleinrichtung weist ferner eine mit dem Drosselkolben 10 zusammenwirkende und sich konisch in Strömungsrichtung verjüngende Drosselfläche 16 auf. Diese Drosselfläche 16 ist in deren Figuren 1 und 2 dargestellten Ausführungsform durch einen Drosselbuchseneinsatz 18 gebildet. Der Drosselbuchseneinsatz 18 wird vorzugsweise von einer der ersten Fläche 14 des Drosselblocks 4 gegenüberliegenden Seite montiert, wobei bevorzugt ist, dass der Drosselbuchseneinsatz 18 in der Drosselbuchse 12 angeordnet ist.

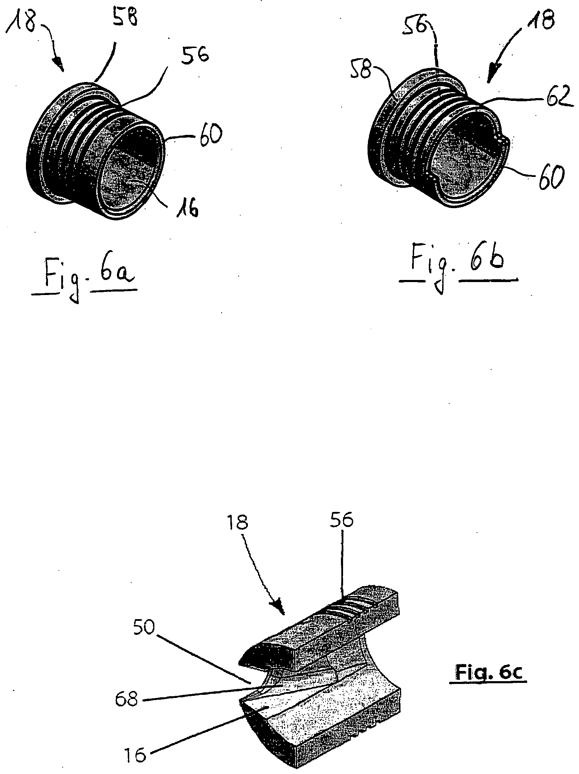

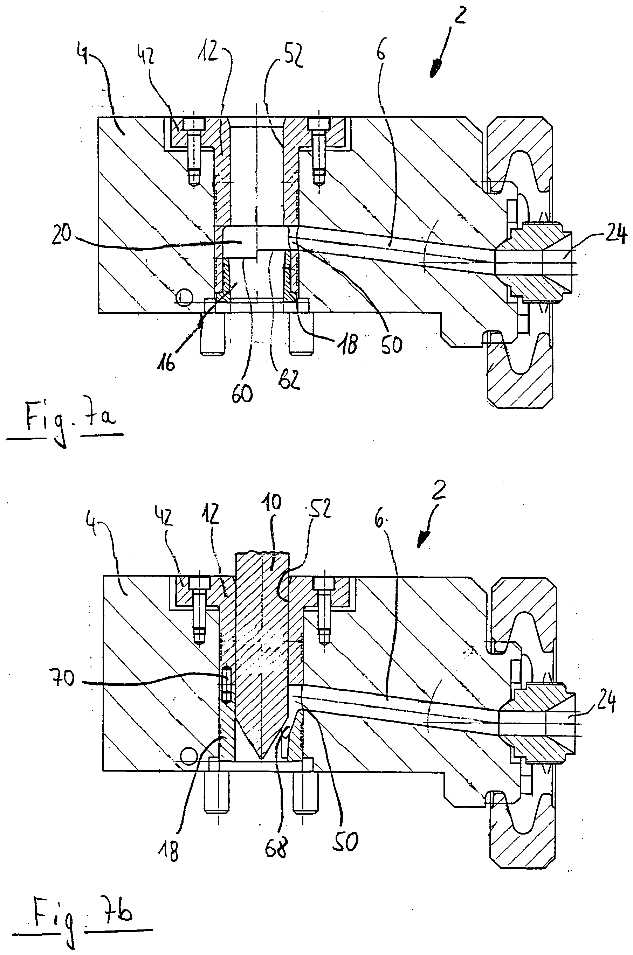

Die Drosselfläche 14 hat einen Endabschnitt mit minimalem Durchmesser, durch den der Drosselkolben 10 hindurchgeführt werden kann, wobei bei durch den Endabschnitt hindurchgeführtem Drosselkolben 10 die Drossel vorzugsweise im wesentlichen geschlossen ist. Die Drosselbuchse 12 und der Drosselbuchseneinsatz 18 bilden vorzugsweise einen Ringraum 20 in einem Mündungsbereich des Einströmkanals 6 in den Ausströmkanal 8. Dieser Ringraum 20 ist insbesondere vorteilhaft, um das durch den Einströmkanal 6 zugeführte Material möglichst gleichmäßig in der Drosseleinrichtung zu verteilen. Hierzu ist es bevorzugt, den Ringraum 20 asymmetrisch auszubilden, vorzugsweise dadurch, dass der dem Mündungsbereich des Einströmkanals 6 gegenüberliegende Ringraumabschnitt größer ausgebildet ist als der dem Mündungsbereich zugewandte Abschnitt. Dies wird nachfolgend insbesondere unter Bezugnahme auf die Figuren 6B und 7A näher beschrieben. Darüber hinaus ist auch eine kontinuierliche, progressiv oder degressiv zunehmende Querschnittsvergrößerung mit zunehmender Entfernung vom Mündungsbereich möglich. Durch eine derartige Konstruktion kann das Material beim Einströmen in den Ringspalt leichter um den Drosselkolben 10 herumströmen, was eine gleichmäßige Temperierung des Materials in der Drossel ermöglicht. Ferner ist es bevorzugt, sämtliche Durchmesseränderungen im Ringraum mit deutlichen Radien zu versehen, um mögliche Todzonen, in denen sich Kautschuk- bzw. Elastomermaterial ablagern könnte, zu eliminieren.

Die Verwendung einer Drosseleinrichtung mit einer Drosselbuchse 12 und einem separaten Drosselbuchseneinsatz 18 ist insbesondere aus Gründen der leichteren Herstellbarkeit, der leichteren Montage und des reduzierten Betriebskostenaufwands vorteilhaft. Da die Drosselfläche 16 durch den Drosselbuchseneinsatz 18 gebildet ist, kann diese bei Auftreten von Verschleißerscheinungen separat ausgetauscht werden, was deutlich kostengünstiger ist als eine integrale Drosselbuchse mit eingearbeiteter Drosselfläche auszutauschen. Die Drosselbuchse 12 weist vorzugsweise eine Labyrinthdichtung 22 auf und ist dadurch im Drosselblock 4 abgedichtet, um ein Austreten von Kautschuk- bzw. Elastomermaterial zu verhindern.

Die erfindungsgemäße Drossel 2 ist insbesondere bei einer Spritzgießmaschine auf vorteilhafte Weise einsetzbar, die zwei Kolben-/Zylindereinheiten aufweist, wie sie beispielsweise in der im einleitenden Teil bereits erwähnten WO 2006/008164 A2 beschrieben ist. Die erfmdungsgemäße Drossel 2 übernimmt dabei auch die Funktion des in dieser Schrift beschriebenen Umlenkstücks zwischen einer ersten Kolben-/ Zylindereinheit und einer zweiten Kolben-/ Zylindereinheit.

In der in den Figuren 1 und 2 dargestellten Ausführungsform ist ein Ausströmende 24 eines Zylinders 26 einer ersten Kolben-/Zylindereinheit der Spritzgießmaschine mit dem Einströmkanal 6 des Drosselblocks 4 gekoppelt. Der Kolben (nicht dargestellt) der ersten Kolben-/Zylindereinheit fördert das Kautschuk- bzw. Elastomermaterial durch den Zylinder 26 in den Einströmkanal 6 der Drossel 2. Der Ausströmkanal 8 der Drossel 2 ist mit einem Einströmende 28 eines zweiten Zylinders 30 einer zweiten Kolben-/ Zylindereinheit verbunden. Ein Ausströmende 32 der zweiten Kolben-/Zylindereinheit ist angepasst, um mit einer (nicht dargestellten) Spritzgießform in Verbindung gebracht zu werden.

Als Kolben für die zweite Kolben-/Zylindereinheit dient erfindungsgemäß vorzugsweise der Drosselkolben 10 der Drossel 2. Der Drosselkolben 10 ist derart ausgebildet, dass er einerseits zum Drosseln des Materialstroms durch die Drossel 2 und andererseits zum Einbringen des Materials aus dem zweiten Zylinder 30 der zweiten Kolben-/ Zylindereinheit in die Spritzgießform dient. Dabei ist besonders vorteilhaft, dass der Zylinder 30 sowie der Ausströmkanal der Drossel 2 durch den Drosselkolben 10 im wesentlichen vollständig geleert werden kann, ohne dass Kautschuk- bzw. Elastomermaterialreste darin verbleiben.

In der in Fig. 1 dargestellten Position ist der Drosselkolben 10 so weit aus dem Einströmkanal 8 bzw. der Drosselbuchse 12 zurückgezogen, dass der Materialfluss aus dem Einströmkanal 6 im wesentlichen ungehindert bzw. ungedrosselt in den Ausströmkanal 8 und den zweiten Zylinder 30 erfolgen kann. Dabei ragt eine Kolbenspitze 34 des Drosselkolbens 10 etwas in den Bereich des Ringspalts 20 und endet etwas innerhalb des Drosselbuchseneinsatzes 18. Dabei wirkt die Kolbenspitze 34 des Drosselkolbens 10 auf vorteilhafte Weise zur Umlenkung des Materialstroms aus dem Einströmkanal 6 in den Ausströmkanal 8.

In der in Figur 2 gezeigten Position ist der Drosselkolben 10 weiter in die Drossel 2 eingefahren, wobei ein Kolbenhemd 36 zu etwa einem Viertel seiner Länge in den Drosselbuchseneinsatz 18 eingefahren ist. Dadurch wird ein Ringspalt 38 zwischen dem Kolbenhemd 36 und der Drosselfläche 16 des Drosselbuchseneinsatzes 18 gebildet, durch den das Kautschuk- bzw. Elastomermaterial gepresst werden muss. Dabei durchströmt das Material ausgehend vom Ausströmende 24 der ersten Kolben-/ Zylindereinheit den Einströmkanal 8 und den Ringraum 20 der Drossel 2, bevor es durch den Ringspalt 38 in das Einströmende 28 des zweiten Zylinders 30 der zweiten Kolben-/Zylindereinheit gelangt. Durch die Positionierung des Drosselkolbens 10 kann die Ringbreite des Ringspalts 38 sowie die Drossellänge, d.h. die Breite des Ringspalts 38, und damit die Drosselwirkung auf das Kautschuk- bzw. Elastomermaterial eingestellt werden, um an die jeweiligen Materialien und Prozessanforderungen optimal angepasste Bedingungen zu schaffen. Da die durch den Drosselbuchseneinsatz 18 bereitgestellte Drosselfläche 16 sich in Strömungsrichtung des Materialflusses verjüngt, wird der Ringspalt 38 umso kleiner, je weiter der Kolben 10 in den Drosselbuchseneinsatz eingeschoben wird.

Die Länge der Drosselfläche 16 liegt vorzugsweise im Bereich zwischen 5 mm und 50 mm, stärker bevorzugt zwischen 10 mm und 40 mm und am stärksten bevorzugt zwischen 20 mm und 30 mm. Die Verjüngung der Drosselfläche 16 ist vorzugsweise durch einen Winkel im Bereich zwischen 0,5° und 5°, stärker bevorzugt zwischen 1,5° und 3,5° und am stärksten bevorzugt zwischen 2° und 3° bezüglich der Rotationsachse des Drosselbuchseneinsatzes 18 definiert. Der Durchmesser des Drosselbuchseneinsatzes 18 liegt vorzugsweise im Bereich zwischen 10 mm und 50 mm, stärker bevorzugt zwischen 15 mm und 40 mm, noch stärker bevorzugt zwischen 20 mm und 30 mm. Der Ringspalt 20 hat vorzugsweise einen gegenüber dem Durchmesser des Kolbenhemds 36 des Drosselkolbens 10 um mindestens 2 mm, stärker bevorzugt um mindestens 4 mm und am stärksten bevorzugt um mindestens 6 mm vergrößerten Durchmesser. Die Breite des Ringraums 20 entspricht üblicherweise etwa dem Durchmesser des Einströmkanals, beispielsweise etwa 10 mm bis 15 mm, insbesondere etwa 12 mm. Bei einem sich erweiternden bzw. einem erweiterten Querschnitt des Ringraums 20 auf der dem Mündungsbereich gegenüberliegenden Seite beträgt die Breite des Ringraums 20 vorzugsweise etwa mindestens 2 mm, vorzugsweise mindestens 4 mm mehr als im Mündungsbereich.

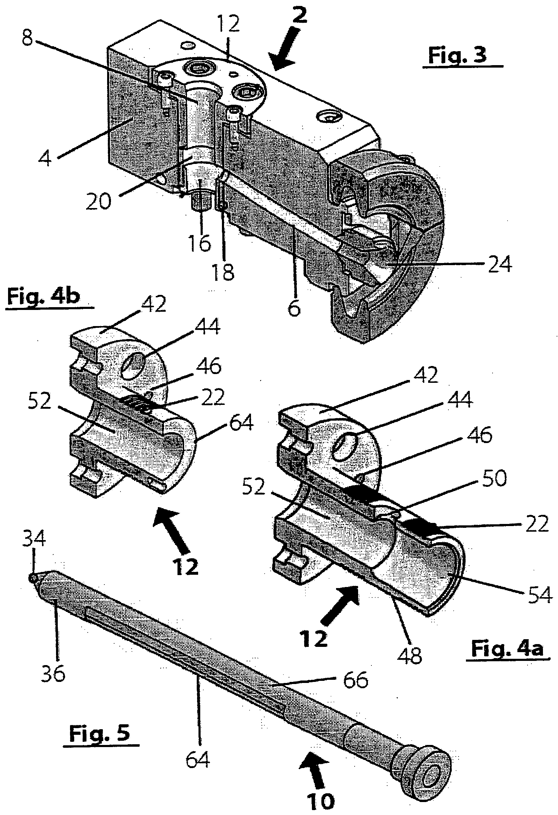

Ist der Drosselkolben 10 im wesentlichen bis zum durchmesserkleinsten Endbereich des Drosselbuchseneinsatzes 18 eingefahren, so ist die Breite des Ringspalts praktisch 0, d.h. die Drosseleinrichtung verschließt den Strömungsweg durch die Drossel 2 im wesentlichen vollständig. Beim weiteren Einfahren des Drosselkolbens 10 in den Zylinder 30 der zweiten Kolben-/Zylindereinheit zum Zwecke des Einbringens des Kautschuk- bzw. Elastomermaterials in die Spritzgießform wird die Mündung des Einströmkanals 6 durch den Kolben im wesentlichen verschlossen, so dass kein Material nachströmen kann. Hierzu kann der Drosselkolben 10 über seine gesamte Länge mit dem gleichen Durchmesser wie im Bereich des Kolbenhemds 36 ausgebildet sein. Alternativ dazu ist es bevorzugt, den Drosselkolben 10 in einem dem Kolbenhemd 36 nachfolgenden Bereich 40 mit einem reduzierten Querschnittsprofil auszubilden. Zur Abdichtung des Mündungsbereiches des Einströmkanals 6 ist es jedoch dann bevorzugt, einen sich in Längsrichtung erstreckenden ersten Bereich des Kolbens, der dem Mündungsbereich zugewandt ist, nicht durchmesserverjüngt, also mit einem dem Kolbenhemd 36 entsprechenden Durchmesser, auszubilden und vorzugsweise zusätzlich einen sich in Längsrichtung erstreckenden zweiten Bereich des Kolbens, der dem Mündungsbereich gegenüberliegt, nicht durchmesserverjüngt auszubilden. Dies ist mit Bezug auf Fig. 5 nachfolgend näher erläutert.

In Fig. 3 ist eine perspektivische Querschnittsansicht einer Ausführungsform einer erfindungsgemäßen Drossel 2, die in etwa der in den Figuren 1 und 2 dargestellten Ausführungsform entspricht, gezeigt. Im Gegensatz zu der in den Figuren 1 und 2 gezeigten Ausführungsform der Drossel 2 ist bei der Drossel 2 gemäß Figur 3 der Einströmkanal 6 im Drosselblock 4 unter einem Winkel von etwa 83° bezüglich des Ausströmkanals 8 angeordnet. Ansonsten entspricht die in Fig. 3 dargestellte Ausführungsform im wesentlichen der in den Figuren 1 und 2 gezeigten Ausführungsform.

In Fig. 4a ist eine erste Ausführungsform einer Drosselbuchse 12 dargestellt, die in der in Fig. 3 gezeigten Drossel 2 eingebaut ist. Die Drosselbuchse 12 weist einen Montageflansch 42 zum Montieren der Drosselbuchse 12 am Drosselblock 4 auf. Zur Montage sind vorzugsweise Durchgangsbohrungen 44 sowie Passstiftbohrungen vorgesehen. Vom Flansch 42 erstreckt sich ein länglicher Abschnitt 48 mit im wesentlichen konstantem Außendurchmesser, an den Labyrinthdichtungen 22 zur Abdichtung der Buchse 12 im Drosselblock 4 vorgesehen sind. Im Abschnitt 48 ist außerdem eine Eintritts- bzw. Mündungsöffnung 50 vorgesehen, die mit dem Einströmkanal 6 im Drosselblock 4 passgenau ausgerichtet ist, um ein Einströmen des Materials in die Drosselbuchse 12 zu ermöglichen. Die Drosselbuchse 12 weist in ihrem Inneren einen Abschnitt 52 mit einem Durchmesser auf, der in etwa dem Außendurchmesser des Drosselkolbens 10 bzw. des Kolbenhemds 36 entspricht. Dieser Abschnitt 52 ist zur Führung des Drosselkolbens 10 in der Drosselbuchse 12 ausgebildet. Im Bereich der Mündungsöffnung 50 erweitert sich der Innendurchmesser zu einem durchmessergrößeren Bereich 54. In diesem durchmessergrößeren Bereich 54 wird der Drosselbuchseneinsatz 18 von einer dem Flansch 42 gegenüberliegenden Seite eingeführt. Verschiedene mit der in Figur 4a gezeigten Drosselbuchse 12 verwendbare Drosselbuchseneinsätze 18 sind in den Figuren 6a und 6a gezeigt.

Bei der in Fig. 6a dargestellten Ausführungsform des Drosselbuchseneinsatzes 18 ist ebenfalls eine Labyrinthdichtung 50 zur Abdichtung zwischen dem Drosselbuchseneinsatz 18 und der Innenfläche des durchmessergrößeren Bereichs 54 der Drosselbuchse 12 vorgesehen. Ferner weist der Drosselbuchseneinsatz 18 einen Anschlagflansch 58 auf, der die Einschublänge des Drosselbuchseneinsatzes 18 in die Drosselbuchse 12 definiert. Das dem Anschlag 58 gegenüberliegende Ende 60 des Drosselbuchseneinsatzes definiert im eingesetzten Zustand zusammen mit der Drosselbuchse 12 den Ringraum 20. Die sich in Strömungsrichtung verjüngende Drosselfläche 16 ist vorzugsweise entlang der gesamten Innenfläche des Drosselbuchseneinsatzes 18 ausgebildet, wobei sich der Durchmesser in Richtung des Flansches 58 verjüngt.

In Figur 6b ist eine zweite Ausführungsform des Drosselbuchseneinsatzes 18 gezeigt, die im wesentlichen der in Figur 6a gezeigten Ausführungsform entspricht, bei der jedoch das dem Flansch 58 gegenüberliegende Ende 60 abgestuft ist, um einen in seiner Breite sich ändernden Ringraum 20 in einem in der Drosselbuchse 12 eingebauten Zustand zu definieren. Dazu wird der Drosselbuchseneinsatz 18 derart in der Drosselbuchse 12 angeordnet, dass ein abgesetzter Bereich 62 gegenüberliegend zur Mündungsöffnung 50 positioniert ist. Dadurch ergibt sich ein gegenüber dem Mündungsbereich des Einstromkanals 6 vergrößerter Ringraum 20, der eine gleichmäßige Materialverteilung im Ringraum 20 fördert.

Alternativ zu der in Figuren 6a und 6b gezeigten Ausführungsform des Drosselbuchseneinsatzes 18 ist es auch möglich, das Ende 60 des Drosselbuchseneinsatzes bezüglich seiner Rotationsachse abgeschrägt auszubilden, so dass ein sich kontinuierlich vom Mündungsbereich zur gegenüberliegenden Seite vergrößernder Ringraum 20 entsteht.

Der Drosselkolben 10 ist in Figur 5 näher gezeigt. Gemäß der Darstellung in Fig. 5 weist der Drosselkolben 10, wie bereits erwähnt, eine Kolbenspitze 34 sowie ein Kolbenhemd 36 auf. Der Durchmesser des Kolbenhemds 36 entspricht im wesentlichen dem Innendurchmesser des durchmesserkleineren Bereichs 52 der Drosselbuchse 12. An das Kolbenhemd 36 anschließend ist vorzugsweise um einen Teil des Umfangs des Kolbens 10 eine sich in Längsrichtung erstreckende Ausnehmung 64 vorgesehen, die bewirkt, dass der Kolben 10 leichter durch die Drosselbuchse 12 und vor allem den Zylinder 30 der zweiten Kolben-/Zylindereinheit geführt werden kann. Wie bereits vorstehend erwähnt, ist jedoch ein der Mündungsöffnung 50 zugewandter erster Bereich 66 des Kolbens 10 mit gleichem Durchmesser bzw. Radius wie im Bereich des Kolbenhemdes 36 ausbildet, damit die Mündungsöffnung 50 beim Vorschieben des Drosselkolbens 10 im wesentlichen verschlossen wird. Vorzugsweise ist ein der Mündungsöffnung 50 abgewandter zweiter Bereich 66 des Kolbens 10 mit gleichem Durchmesser bzw. Radius wie im Bereich des Kolbenhemdes 36 ausgebildet, so dass der Kolben im Zylinder beidseitig geführt wird.

In Fig. 7a ist die vorstehend beschriebene Ausführungsform der Drossel 2 in montiertem Zustand gezeigt. Dabei ist insbesondere der abgesetzte Ringraum 20 deutlich zu erkennen, der durch die Montage der Drosselbuchse 12 von einer Seite des Drosselblocks 4 und die Montage des Drosselbuchseneinsatzes 18 von der gegenüberliegenden Seite des Drosselblocks 4 bereitgestellt wird.

Wie bereits vorstehend beschrieben, entspricht die Breite des Ringraums 20 im Bereich der Mündungsöffnung 50 im wesentlichen dem Durchmesser der Mündungsöffnung, wobei sich die Breite des Ringraums 20 in einem Bereich von der Mündungsöffnung 50 entfernt, vergrößert. Dies kann stufenweise oder kontinuierlich geschehen. In der in Fig. 7a gezeigten Ausführungsform ist die Ringraumbreite durch das abgesetzte Ende 60 des Drosselbuchseinsatzes 18 gebildet.

In Figur 4b ist eine weitere Ausführungsform einer Drossel 12 dargestellt, die ebenfalls einen Flansch 42 sowie einen sich davon weg erstreckenden Zylinderabschnitt 52 zur Aufnahme des Drosselkolbens 10 aufweist. Ferner sind auch die Montageöffnungen 44 sowie die Passstiftöffnung 46 und die Labyrinthdichtung 22 vorgesehen. Als wesentlicher Unterschied zur Drosselbuchse 12 gemäß Figur 4a ist zu erkennen, dass der zylindrische Abschnitt 52 wesentlich kürzer ausgebildet ist, und zwar mit einer derartigen Länge, dass eine Stirnfläche 64 der Drosselbuchse 12 im Mündungsbereich des Einströmkanals 6 endet. Dies ist in Fig. 7b, in der diese Ausführungsform der erfindungsgemäßen Drossel 2 im montierten Zustand dargestellt ist, deutlich gezeigt.

Eine Ausführungsform eines mit dieser Drosselbuchse 12 kombinierbaren Drosselbuchseneinsatzes 18 ist in Figur 6c gezeigt. Bei dieser Ausführungsform wird der Drosselkolben 10 nicht ringförmig umspült, sondern der Materialfluss erfolgt nur auf einer Seite des Kolbens um einen Teil des Umfangs des Kolbens. Hierzu ist im Drosselbuchseneinsatz 18 die Drosselfläche 16 in Form eines bezüglich der Längsachse schräg ausgebildeten Schlitzes 68 geformt. Dieser Schlitz 68 erstreckt sich unter einem Winkel von vorzugsweise etwa zwischen 15° und 25°, stärker bevorzugt 18° bis 20° bezüglich der Längsachse des Drosselbuchseneinsatzes 18. Gemäß dieser Ausführungsform der Drossel 2 ist die Mündungsöffnung 50 für den Materialeintritt aus dem Einströmkanal 60 im Drosselbuchseneinsatz 18 vorgesehen. Ausgehend von der Mündungsöffnung 50 erstreckt sich der Schlitz 68 derart unter einem Winkel, dass sich ein sich verjüngender Kanal in Strömungsrichtung erstreckt. Vorzugsweise ist der Schlitz 68 etwa um einen Umfangsbereich von etwa 10% bis 40%, stärker bevorzugt 15-30% des vollständigen Umfangs in den Drosselbuchseneinsatz 18 vorgesehen.

In der in Figur 7b gezeigten montierten Ausführungsform dieser Drossel 2 ist zu erkennen, dass die Drosselbuchse 12 mit dem Drosselbuchseneinsatz 18 durch einen Passstift 70 in geeigneter Ausrichtung positioniert ist, so dass die Mündungsöffnung 50 des Drosselbuchseneinsatzes 18 mit dem Einströmkanal 6 ausgerichtet ist. In der in Figur 7b dargestellten Position des Drosselkolbens 10 wird durch den Drosselkolben 10 und den Drosselbuchseneinsatz 18, insbesondere den darin vorgesehenen Schlitz 68, ein Strömungsweg für das einströmende Material definiert, der je nach Positionierung des Drosselkolbens 10 breiter ist oder enger wird. Diese Ausführungsform ist insbesondere im Hinblick auf die geringere Verschmutzung beim Zurückführen des Drosselkolbens 10 nach dem Einspritzen des Kautschuk- bzw. Elastomermaterials in die Spritzgießform von Vorteil.

Durch die erfindungsgemäße Konstruktion der Drossel wird es ermöglicht, bei verschiedensten Kautschuk- bzw. Elastomermaterialien kurze Zykluszeiten beim Spritzgießen zu realisieren und die jeweils gewünschten verschiedenen Temperaturen im Material durch die geeignete Positionierung des Drosselkolbens einzustellen.

### Beispiel

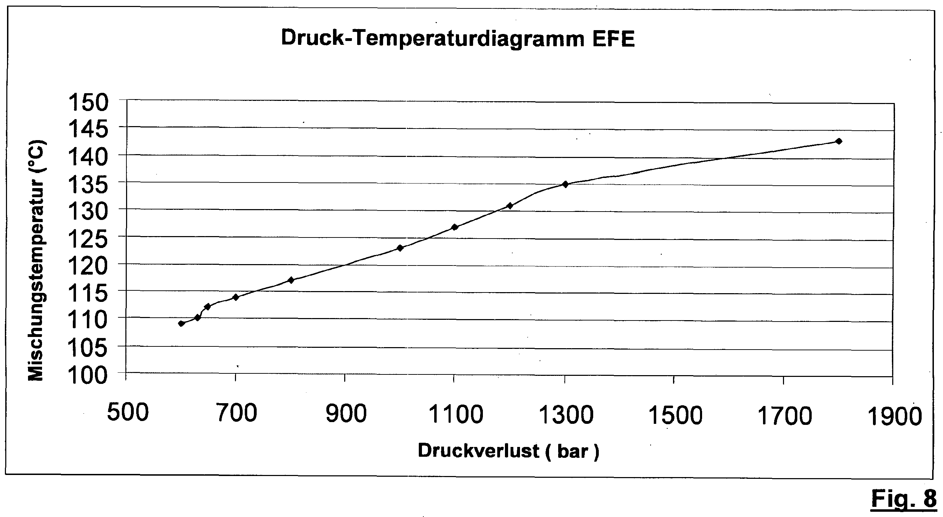

Die Wirkung einer mit einer erfindungsgemäßen Drossel 2 ausgestatteten Spritzgießmaschine auf das Kautschuk- bzw. Elastomermaterial wird nachfolgend unter Bezugnahme auf die Figuren 8 bis 10 beispielhaft beschrieben. Die in diesem Beispiel verwendete Spritzgießmaschine entspricht im Grundaufbau der in den Figuren 1 und 2 gezeigten Spritzgießmaschine. Die Drosselbuchse 12 entspricht der in Figur 4b gezeigten Ausführungsform. Der Drosselkolben 10 und der Drosselbuchseneinsatz 18 entsprechen den in Figuren 5 bzw. 6c dargestellten Ausführungsformen. Als Material wurde ein Streifen mit einem Querschnitt von 8 mm mal 25 mm aus einer Mischung aus Ethylen-Propylen-Dien-Kautschuk mit einer Härte von 70 Shore (EPDM 70 Shore) verarbeitet.

In Figur 8 ist die Mischungstemperatur des EPDM in Abhängigkeit vom Druckverlust am Kolben der ersten Kolben-/Zylindereinheit dargestellt. Mit anderen Worten zeigt Figur 8 wie sich die Mischungstemperatur bei größer werdendem Durchflusswiderstand durch die Drossel 2, also bei kleiner werdendem Drosselquerschnitt, verhält.

In der folgenden Tabelle 1 sind die dem Diagramm gemäß Figur 8 zugrundeliegenden Daten angegeben. Dabei ist der Widerstand bzw. Druckverlust als Druck angegeben, der benötigt wurde, um das Material aus dem ersten Zylinder 26 der ersten Kolben-/ Zylindereinheit durch die Drossel 2, den zweiten Zylinder 30 der zweiten Kolben-/ Zylindereinheit und eine (nicht dargestellte) Düse ins Freie zu spritzen. Der Kolben der ersten Kolben-/Zylindereinheit wurde hierfür mit einer Geschwindigkeit von 100 cm³/s in den Zylinder 26 eingefahren. Die jeweilige Drosselkolbenstellung ist in Form des noch verbleibenden Verfahrwegs im zweiten Zylinder 30 in Millimetern angegeben. Bei einer Kolbenstellung von 313 mm ist die Drossel im wesentlichen voll geöffnet, wie dies in etwa in Figur 1 gezeigt ist. Bei etwa 280 mm Kolbenstellung wäre die Drossel im wesentlichen vollständig geschlossen; die restlichen 280 mm Verfahrweg dienen dann zum Ausbringen des Materials aus dem zweiten Zylinder 30. Zwischen 313 mm und 280 mm ist die Drossel 2 teilweise geöffnet.

**Tabelle 1:**

| Geschwindigkeit Kolben erste Kolben-/ Zylindereinheit in ccm/s | Geschwindigkeit Drosselkolben in ccm/s | Kolbenstellung in mm | benötigter Druck in bar | Massetemperatur in °C |
|---|---|---|---|---|
| 100 | 60 | 313 | ∼600 | 109 |
| 100 | 60 | 307 | ∼630 | 110 |
| 100 | 60 | 301 | ∼650 | 112 |
| 100 | 60 | 295 | ∼700 | 114 |
| 100 | 60 | 289 | ∼800 | 117 |
| 100 | 60 | 287 | ∼1000 | 123 |
| 100 | 60 | 286 | ∼1100 | 127 |
| 100 | 60 | 285 | ∼1200 | 131 |
| 100 | 60 | 284 | ∼1300 | 135 |
| 100 | 60 | 283 | ∼1800 | 143 |

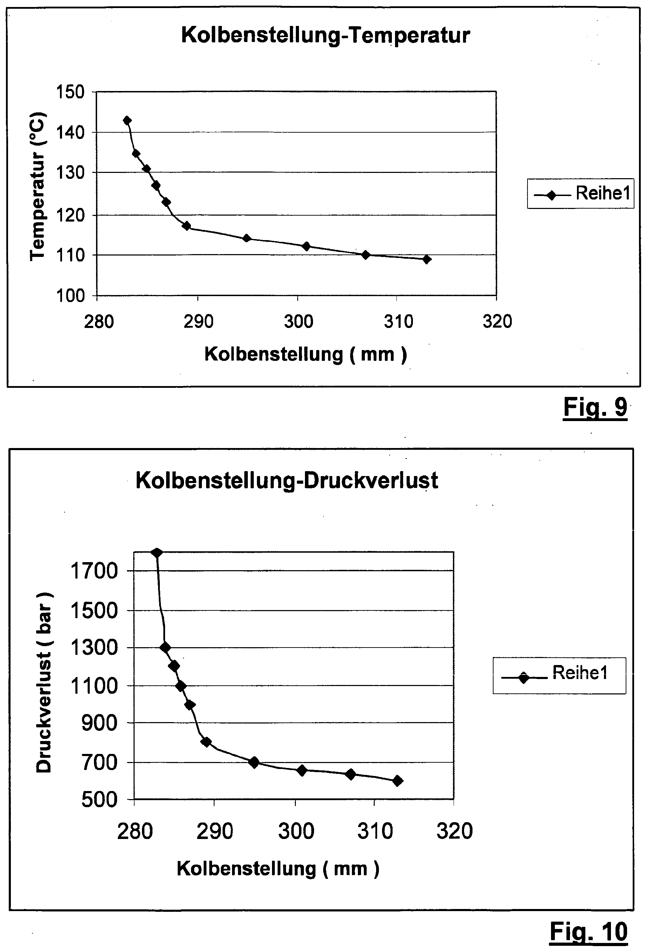

Aus den Diagrammen nach Figuren 9 und 10 ergibt sich, dass mit zunehmender Schließung der Drossel, d.h. bei kleiner werdendem Durchgangsquerschnitt durch die Drossel, der benötigte Druck am ersten Kolben der ersten Kolben-/Zylindereinheit deutlich ansteigt, was mit einer Temperaturerhöhung des Elastomer- bzw. Kautschukmaterials einhergeht. Die Temperatur des Materials wurde mit einem Einstechfühler gemessen.

## Patentansprüche

1. Drossel (2) für eine Spritzgießmaschine zum Spritzgießen von Kautschuk- bzw. Elastomermaterialien, mit einem Drosselblock (4), einem darin vorgesehenen Einströmkanal (6) und Ausströmkanal (8), wobei der Einströmkanal unter einem Winkel in den Ausströmkanal mündet, und mit einer einen Drosselkolben (10) aufweisenden Drosseleinrichtung, wobei der Drosselkolben sowohl zum Drosseln des Materialflusses als auch zum Einspritzen des Kautschuk- bzw. Elastomermaterials in eine Spritzgießform dient.

2. Drossel nach Anspruch 1, wobei der Winkel größer als 45°, vorzugsweise größer als 75° ist.

3. Drossel nach Anspruch 1 oder 2, wobei die Drosseleinrichtung eine mit dem Drosselkolben (10) zusammenwirkende und sich konisch in Strömungsrichtung verjüngende Drosselfläche (16) aufweist, wobei die Drosselfläche einen Endabschnitt mit minimalem Durchmesser hat, durch den der Drosselkolben (10) hindurch geführt werden kann, wobei bei durch den Endabschnitt hindurch geführtem Drosselkolben die Drossel (2) geschlossen ist.

4. Drossel nach einem der Ansprüche 1 bis 3, wobei die Drosseleinrichtung eine Drosselbuchse (12) und einen Drosselbuchseneinsatz (18) aufweist, wobei die Drosselbuchse und der Drosselbuchseneinsatz einen Ringraum (20) im Mündungsbereich des Einströmkanals (6) in den Ausströmkanal (8) bilden, wobei vorzugsweise ein Querschnitt des Ringraums (20) sich mit einer Entfernung vom Einströmkanal (6) vergrößert.

5. Drossel nach Anspruch 4, wobei der Drosselbuchseneinsatz (18) eine sich konisch in Strömungsrichtung verjüngende Drosselfläche (16) definiert, die mit dem Drosselkolben (10) zusammenwirkt.

6. Drossel (2) für eine Spritzgießmaschine zum Spritzgießen von Kautschuk- bzw. Elastomermaterialien, mit einem Drosselblock (4), einem darin vorgesehenen Einströmkanal (6) und Ausströmkanal (8), wobei der Einströmkanal in den Ausströmkanal mündet, und mit einer in dem Ausströmkanal angeordneten Drosseleinrichtung, wobei die Drosseleinrichtung einen Drosselkolben (10) und eine mit dem Drosselkolben zusammenwirkende und sich konisch in Strömungsrichtung verjüngende Drosselfläche (16) aufweist, wobei die Drosselfläche einen Endabschnitt mit minimalem Durchmesser hat, durch den der Drosselkolben (10) hindurch geführt werden kann, wobei bei durch den Endabschnitt hindurch geführtem Drosselkolben die Drossel (2) geschlossen ist.

7. Drossel nach Anspruch 6, wobei die Drosseleinrichtung eine Drosselbuchse (12) und einen Drosselbuchseneinsatz (18) aufweist, wobei die Drosselbuchse und der Drosselbuchseneinsatz einen Ringraum (20) im Mündungsbereich des Einströmkanals (6) in den Ausströmkanal (8) bilden, wobei vorzugsweise ein Querschnitt des Ringraums (20) sich mit einer Entfernung vom Einströmkanal (6) vergrößert.

8. Drossel nach Anspruch 7, wobei der Drosselbuchseneinsatz (18) die sich konisch in Strömungsrichtung verjüngende Drosselfläche (16) definiert.

9. Drossel (2) für eine Spritzgießmaschine zum Spritzgießen von Kautschuk- bzw. Elastomermaterialien, mit einem Drosselblock (4), einem darin vorgesehenen Einströmkanal (6) und Ausströmkanal (8), wobei der Einströmkanal in den Ausströmkanal mündet, und mit einer in dem Ausströmkanal angeordneten Drosseleinrichtung, wobei die Drosseleinrichtung einen Drosselkolben (10), eine Drosselbuchse (12) und einen Drosselbuchseneinsatz (18) aufweist, wobei die Drosselbuchse und der Drosselbuchseneinsatz einen Ringraum (20) im Mündungsbereich des Einströmkanals (6) in den Ausströmkanal (8) bilden, wobei vorzugsweise ein Querschnitt des Ringraums (20) sich mit einer Entfernung vom Einströmkanal (6) vergrößert.

10. Drossel nach einem der Ansprüche 4, 5 und 7 bis 9, wobei der Drosselbuchseneinsatz (18) in der Drosselbuchse (12) angeordnet ist.

11. Drossel nach einem der Ansprüche 4, 5 und 7 bis 10, wobei die Drosselbuchse (12) und der Drosselbuchseneinsatz (18) von gegenüberliegenden Seiten des Drosselblocks (4) montierbar sind.

12. Drossel nach einem der Ansprüche 9 bis 11, wobei der Drosselbuchseneinsatz (18) eine sich konisch in Strömungsrichtung verjüngende Drosselfläche (16) definiert, die mit dem Drosselkolben (10) zusammenwirkt.

13. Spritzgießmaschine zum Spritzgießen von Kautschuk- bzw. Elastomermaterialien mit einem Extruder, einer ersten Kolben-/Zylindereinheit und einer in Serie dazu vorgesehenen zweiten Kolben-/Zylindereinheit und einer Drossel (2) nach einem der Ansprüche 1 bis 12, wobei der Einströmkanal (6) der Drossel mit einem Ausströmende (24) der ersten Kolben-/Zylindereinheit und der Ausströmkanal der Drossel mit einem Einströmende (28) der zweiten Kolben-/Zylindereinheit in Strömungsverbindung steht.

14. Spritzgießmaschine nach Anspruch 13, wobei der Kolben der zweiten Kolben-/Zylindereinheit als Drosselkolben (10) dient und den Zylinder (30) der zweiten Kolben-/Zylindereinheit im wesentlichen vollständig entleert.

15. System zum Temperieren von Kautschuk- bzw. Elastomermaterialien beim Spritzgießen, mit:
a) einer einen ersten Kolben und einen ersten Zylinder (26) aufweisenden ersten Kolben-/Zylindereinheit zum Zuführen des Kautschuk- bzw. Elastomermaterials in und durch eine Drossel (2) nach einem der Ansprüche 1 bis 12; und
b) einer Einrichtung zum Einstellen der Position des Drosselkolbens (10) zum Drosseln des Materialflusses entsprechend für das jeweilige Kautschuk- bzw. Elastomermaterial vorbestimmter Parameter.

16. System nach Anspruch 15, mit:
c) einer Einrichtung zum Bewegen des Drosselkolbens (10) durch die Drosseleinrichtung in einen zweiten Zylinder (30) einer zweiten Kolben-/Zylindereinheit, um das Kautschuk- bzw. Elastomermaterial in eine Spritzgießform einzubringen.

17. Verfahren zum Temperieren von Kautschuk- bzw. Elastomermaterialien beim Spritzgießen, mit den Schritten:
a) Zuführen des Kautschuk- bzw. Elastomermaterials mittels einer einen ersten Kolben und einen ersten Zylinder (26) aufweisenden ersten Kolben-/Zylindereinheit in und durch eine Drossel (2) nach einem der Ansprüche 1 bis 12; und
b) Einstellen des Drosselkolbens (10) entsprechend für das jeweilige Kautschuk- bzw. Elastomermaterial vorbestimmter Parameter.

18. Verfahren nach Anspruch 17 mit dem Schritt:
c) Bewegen des Drosselkolbens (10) durch die Drosseleinrichtung in einen zweiten Zylinder (30) einer zweiten Kolben-/Zylindereinheit, um das Kautschuk- bzw. Elastomermaterial in eine Spritzgießform einzubringen.

## Claims

1. A throttle (2) for an injection molding machine for injection molding rubber or elastomeric materials, comprising a throttle block (4), an inlet channel (6) and an outlet channel (8) provided therein, wherein the inlet channel leads into the outlet channel at an angle, and a throttle means comprising a throttle piston (10), wherein the throttle piston serves to reduce the material flow and to inject the rubber or elastomeric material into an injection mold.

2. The throttle according to claim 1, wherein the angle is greater than 45°, preferably greater than 75°.

3. The throttle according to claim 1 or 2, wherein the throttle means comprises a throttle area (16) interacting with the throttle piston (10) and tapering conically in flow direction, wherein the throttle area comprises an end portion having minimum diameter through which the throttle piston (10) can be led, wherein the throttle (2) is closed when the throttle piston is led through the end portion.

4. The throttle according to any one of claims 1 to 3, wherein the throttle means comprises a throttle bushing (12) and a throttle bushing insert (18), wherein the throttle bushing and the throttle bushing insert form an annulus (20) in the port region of the inlet channel (6) in the outlet channel (8), wherein preferably a cross-section of the annulus (20) increases with a distance from the inlet channel (6).

5. The throttle according to claim 4, wherein the throttle bushing insert (18) defines a throttle area (16) conically tapering in flow direction, which interacts with the throttle piston (10).

6. A throttle (2) for an injection molding machine for injection molding rubber or elastomeric materials, comprising a throttle block (4), an inlet channel (6) and an outlet channel (8) provided therein, wherein the inlet channel leads into the outlet channel, and a throttle means arranged in the outlet channel, wherein the throttle means comprises a throttle piston (10) and a throttle area (16) interacting with the throttle piston and tapering conically in flow direction, wherein the throttle area comprises an end portion having minimum diameter through which the throttle piston (10) can be led, wherein the throttle (2) is closed when the throttle piston is led through the end portion.

7. The throttle according to claim 6, wherein the throttle means comprises a throttle bushing (12) and a throttle bushing insert (18), wherein the throttle bushing and the throttle bushing insert form an annulus (20) in the port region of the inlet channel (6) in the outlet channel (8), wherein preferably a cross-section of the annulus (20) increases with a distance to the inlet channel (6).

8. The throttle according to claim 7, wherein the throttle bushing insert (18) defines the throttle area (16) conically tapering in flow direction.

9. A throttle (2) for an injection molding machine for injection molding rubber or elastomeric materials, comprising a throttle block (4), an inlet channel (6) and outlet channel (8) provided therein, wherein the inlet channel leads into the outlet channel, and a throttle means arranged in the outlet channel, wherein the throttle means comprises a throttle piston (10), a throttle bushing (12) and a throttle bushing insert (18), wherein the throttle bushing and the throttle bushing insert form an annulus (20) in the port region of the inlet channel (6) in the outlet channel (8), wherein preferably a cross-section of the annulus (20) increases with a distance to the inlet channel (6).

10. The throttle according to any one of claims 4, 5 and 7 to 9, wherein the throttle bushing insert (18) is arranged in the throttle bushing (12).

11. The throttle according to any one of claims 4, 5 and 7 to 10, wherein the throttle bushing (12) and the throttle bushing insert (18) are mountable from opposite sides of the throttle block (4).

12. The throttle according to any one of claims 9 to 11, wherein the throttle bushing insert (18) defines a throttle area (16) tapering conically in flow direction, which interacts with the throttle piston (10).

13. The injection molding machine for injection molding rubber or elastomeric materials comprising an extruder, a first piston/cylinder unit and a second piston/cylinder unit connected in series thereto and a throttle (2) according to any one of claims 1 to 12, wherein the inlet channel (6) of the throttle is in flow connection with an outlet end (24) of the first piston/cylinder unit and the outlet channel of the throttle with an inlet end (28) of the second piston/cylinder unit.

14. The injection molding machine according to claim 13, wherein the piston of the second piston/cylinder unit serves as throttle piston (10) and basically completely empties the cylinder (30) of the second piston/cylinder unit.

15. A system for tempering rubber or elastomeric materials during injection molding, comprising:
(a) a first piston/cylinder unit comprising a first piston and a first cylinder (26) for supplying the rubber or elastomeric material in and through a throttle (2) according to any one of claims 1 to 12; and
(b) means for adjusting the position of the throttle piston (10) for reducing the material flow according to the parameters predetermined for the respective rubber or elastomeric material.

16. The system according to claim 15, comprising:
(c) means for moving the throttle piston (10) through the throttle means in a second cylinder (30) of a second piston/cylinder unit to feed the rubber or elastomeric material into an injection mold.

17. A method for tempering rubber or elastomeric materials during injection molding, comprising the steps:
(a) supplying the rubber or elastomeric material by means of a first piston/cylinder unit comprising a first piston and a first cylinder (26) in and through a throttle (2) according to any one of claims 1 to 12; and
(b) adjusting the throttle piston (10) according to parameters predetermined for the respective rubber or elastomeric material.

18. The method according to claim 17 comprising the step:
(c) moving the throttle piston (10) through the throttle means in a second cylinder (30) of a second piston/cylinder unit to feed the rubber or elastomeric material into an injection mold.

## Revendications

1. Etranglement (2) pour une machine de moulage par injection pour le moulage par injection de matériaux à base de caoutchouc ou d'élastomère, comportant un bloc d'étranglement (4), un canal d'admission (6) et un canal de sortie (8) prévus dans celui-ci, le canal d'admission débouchant sous un angle dans le canal de sortie, et comportant un dispositif d'étranglement présentant un piston d'étranglement (10), le piston d'étranglement servant aussi bien à étrangler le flux de matériau qu'à injecter le matériau à base de caoutchouc ou d'élastomère dans le moule de moulage par injection.

2. Etranglement selon la revendication 1, dans lequel l'angle est supérieur à 45°, de préférence supérieur à 75°.

3. Etranglement selon la revendication 1 ou 2, dans lequel le dispositif d'étranglement présente une surface d'étranglement (16) se rétrécissant en forme conique en direction d'écoulement et coopérant avec le piston d'étranglement (10), la surface d'étranglement ayant un tronçon d'extrémité avec diamètre minimum à travers lequel on peut faire passer le piston d'étranglement, l'étranglement (2) étant fermé lorsque le piston d'étranglement est passé à travers le tronçon d'extrémité.

4. Etranglement selon l'une des revendications 1 à 3, dans lequel le dispositif d'étranglement présente une douille d'étranglement (12) et un insert de douille d'étranglement (18), la douille d'étranglement et l'insert de douille d'étranglement formant une chambre annulaire (20) dans la zone d'embouchure du canal d'admission (6) dans le canal de sortie (8), une section transversale de la chambre annulaire (20) s'agrandissant de préférence avec un éloignement du canal d'admission (6).

5. Etranglement selon la revendication 4, dans lequel l'insert de douille d'étranglement (18) définit une surface d'étranglement (16) qui se rétrécit en forme conique en direction d'écoulement et qui coopère avec le piston d'étranglement (10).

6. Etranglement (2) pour une machine de moulage par injection pour le moulage par injection de matériaux à base de caoutchouc ou d'élastomère, comportant un bloc d'étranglement (4), un canal d'admission (6) et un canal de sortie (8) prévus dans celui-ci, le canal d'admission débouchant dans le canal de sortie, et comportant un dispositif d'étranglement agencé dans le canal de sortie, le dispositif d'étranglement présentant un piston d'étranglement (10) et une surface d'étranglement (16) se rétrécissant en forme conique en direction d'écoulement et coopérant avec le piston d'étranglement (10), la surface d'étranglement ayant un tronçon d'extrémité avec diamètre minimum à travers lequel peut être passé le piston d'étranglement (10), l'étranglement (2) étant fermé lorsque le piston d'étranglement est passé à travers le tronçon d'extrémité.

7. Etranglement selon la revendication 6, dans lequel le dispositif d'étranglement présente une douille d'étranglement (12) et un insert de douille d'étranglement (18), la douille d'étranglement et l'insert de douille d'étranglement formant une chambre annulaire (20) dans la zone d'embouchure du canal d'admission (6) dans le canal de sortie (8), une section transversale de la chambre annulaire (20) s'agrandissant de préférence avec un éloignement du canal d'admission (6).

8. Etranglement selon la revendication 7, dans lequel l'insert de douille d'étranglement (18) définit une surface d'étranglement (16) qui se rétrécit en forme conique en direction d'écoulement.

9. Etranglement (2) pour une machine de moulage par injection pour le moulage par injection de matériaux à base de caoutchouc ou d'élastomère, comportant un bloc d'étranglement (4), un canal d'admission (6) et un canal de sortie (8) prévus dans celui-ci, le canal d'admission débouchant dans le canal de sortie, et comportant un dispositif d'étranglement agencé dans le canal de sortie, le dispositif d'étranglement présentant un piston d'étranglement (10), une douille d'étranglement (12) et un insert de douille d'étranglement (18), la douille d'étranglement et l'insert de douille d'étranglement formant une chambre annulaire (20) dans la zone d'embouchure du canal d'admission (6) dans le canal de sortie (8), une section transversale de la chambre annulaire (20) s'agrandissant de préférence avec un éloignement du canal d'admission (6).

10. Etranglement selon l'une des revendications 4, 5 et 7 à 9, dans lequel l'insert de douille d'étranglement (18) est agencé dans la douille d'étranglement (12).

11. Etranglement selon l'une des revendications 4, 5 et 7 à 10, dans lequel la douille d'étranglement (12) et l'insert d'étranglement (18) peuvent être montés depuis des côtés opposés du bloc d'étranglement (4).

12. Etranglement selon l'une des revendications 9 à 11, dans lequel l'insert de douille d'étranglement (18) définit une surface d'étranglement (16) qui se rétrécit en forme conique en direction d'écoulement et qui coopère avec le piston d'étranglement (10).

13. Machine de moulage par injection pour le moulage par injection de matériaux à base de caoutchouc ou d'élastomère, comportant une extrudeuse, une première unité piston/cylindre et une deuxième unité piston/cylindre prévue en série avec celle-ci, et un étranglement (2) selon l'une des revendications 1 à 12, dans laquelle le canal d'admission (6) de l'étranglement est en liaison d'écoulement avec une extrémité de sortie (24) de la première unité piston/cylindre et le canal de sortie de l'étranglement est en liaison d'écoulement avec une extrémité d'admission (28) de la deuxième unité piston/cylindre.

14. Machine de moulage par injection selon la revendication 13, dans laquelle le piston de la deuxième unité piston/cylindre sert de piston d'étranglement (10) et vide de manière sensiblement totale le cylindre (30) de la deuxième unité piston/cylindre.

15. Système pour tempérer des matériaux à base de caoutchouc ou d'élastomère lors du moulage par injection, comportant
a) une première unité piston/cylindre présentant un premier piston et un premier cylindre (26) pour amener le matériau à base de caoutchouc ou d'élastomère dans et à travers un étranglement (2) selon l'une des revendications 1 à 12 ; et
b) un dispositif pour régler la position du piston d'étranglement (10) pour étrangler le flux de matériau selon des paramètres prédéterminés pour le matériau à base de caoutchouc ou d'élastomère respectif.

16. Système selon la revendication 15, comportant
c) un dispositif pour déplacer le piston d'étranglement (10) à travers le dispositif d'étranglement dans un deuxième cylindre (30) d'une deuxième unité piston/cylindre pour introduire le matériau de caoutchouc ou d'élastomère dans un moule de moulage par injection.

17. Procédé pour tempérer des matériaux de caoutchouc ou d'élastomère lors du moulage par injection, comportant les étapes suivantes :
a) on amène le matériau à base de caoutchouc ou d'élastomère au moyen d'une première unité piston/cylindre présentant un premier piston et un premier cylindre (26) dans et à travers un étranglement (2) selon l'une des revendications 1 à 12 ; et
b) on règle le piston d'étranglement (10) selon des paramètres prédéterminés pour le matériau à base de caoutchouc ou d'élastomère respectif.

18. Procédé selon la revendication 17, comportant l'étape suivante :
c) on déplace le piston d'étranglement (10) à travers le dispositif d'étranglement dans un deuxième cylindre (30) d'une deuxième unité piston/cylindre pour introduire le matériau à base de caoutchouc ou d'élastomère dans un moule de moulage par injection.
